# EUROPÄISCHE PATENTSCHRIFT

(11) **EP 3 287 396 B1**
(45) Veröffentlichungstag und Bekanntmachung des Hinweises auf die Patenterteilung: **06.12.2023**
(21) Anmeldenummer: 16185726.3
(22) Anmeldetag: 25.08.2016
(51) Int. Cl.: B65G 15/22, B65G 47/244, B65G 47/31

(54) **FÖRDERSYSTEM MIT SEGMENTEN**
CONVEYOR SYSTEM WITH SEGMENTS
SYSTEME D'ALIMENTATION A SEGMENTS

(43) Veröffentlichungstag der Anmeldung: 28.02.2018
(73) Patentinhaber: Körber Supply Chain Logistics GmbH, 78467 Konstanz (DE)
(72) Erfinder: VITALINI, Dr. Michele, 90475 Nürnberg (DE)
(74) Vertreter: Müller Schupfner & Partner Patent- und Rechtsanwaltspartnerschaft mbB

(56) Entgegenhaltungen:
- EP-A1- 1 666 386
- WO-A1-2004/039706
- WO-A1-2006/002156
- WO-A1-2008/074453
- US-A1- 2011 147 163
- US-A1- 2013 220 775
- US-A1- 2016 200 525

## Beschreibung

Die vorliegende Erfindung bezieht sich auf das technische Gebiet eines Fördersystems für Stückgüter.

Stückgüter werden auf Fördersystem entlang einer Förderstrecke transportiert, wobei eine Manipulation der entlang einer Haupttransportrichtung transportierten Stückgüter, beispielsweise Vereinzelung und/ oder Rotation, ohne eine Verwendung weiterer Vorrichtungen wie beispielsweise Ablenkblechen o.ä. erfolgt, indem die Stückgüter über mehr als ein Fördermittel transportiert werden. Für die Vereinzelung von Stückgütern im postalischen und logistischen Bereich werden Singulatoren eingesetzt, die die Stückgüter zudem teilweise noch ausrichten können. WO2004/039706 beschreibt einen Singulator mit hintereinander und parallel zueinander angeordneten Förderbändern als Fördermitteln, welche Stückgüter entlang einer Hauptförderrichtung transportieren. Die quer zur Hauptförderrichtung und parallel zueinander angeordneten Fördermittel bilden Segmente aus und durch unterschiedliches Ansteuern der Fördermittel eines Segmentes wird eine Vereinzelung und/ oder Rotation der Stückgüter erreicht.

Allerdings sind dieser und andere typische Singulatoren stets auf eine bestimmte Größe der Stückgüter ausgelegt. Eine zuverlässige Vereinzelung kann nur erreicht werden, wenn die Stückgüter größer als die Breite der Auflagefläche der Fördermittel ist. Der Markt verlangt aber mehr und mehr die Bearbeitung, Ausrichtung und Vereinzelung von Stückgütern und Sendungen mit kleineren Abmessungen. Wenn zwei kleine Stückgüter parallel nebeneinander auf einem Förderband des oben beschriebenen Singulators aufliegen, werden sie stets gemeinsam weiter transportiert und können nicht vereinzelt werden. Da die Fördermittel direkt hintereinander angeordnet und in einer Linie ausgerichtet sind, bleiben sie auch bei einer Übergabe von einem vorangehenden auf ein nachfolgendes Fördermittel stets zusammen aufliegend und können nicht einzeln von den Fördermitteln transportiert werden - auch bei individueller Ansteuerung der Fördermittel. Die dadurch nicht erfolgende Vereinzelung kann letztendlich zu einer Fehlsortierung führen. Um dieses Problem zu reduzieren, werden zusätzliche Fördermittel wie Bänder und Conveyor nach dem Singulator installiert und so versucht, die parallelen Sendungen zu separieren und vor dem Singulator zurückzuführen, was mit zusätzlichem Platzbedarf verbunden ist.

Das Dokument WO 2006/002156 A1 offenbart ein Fördersystem zum Transport von Stückgütern nach dem Oberbegriff des Anspruchs 1 und ein Verfahren zum Transport von Stückgütern nach dem Oberbegriff des Anspruchs 6.

Der vorliegenden Erfindung liegt die Aufgabe zugrunde, Stückgüter, insbesondere auch kleiner dimensionierte Stückgüter, auf einem Fördersystem zu transportieren und dabei während ihres Transports effizient zu manipulieren. Diese Aufgabe wird durch ein Fördersystem zum Transport von Stückgütern nach Anspruch 1 und durch ein Verfahren zum Transport von Stückgütern nach Anspruch 6 gelöst.

Gemäß einem Aspekt der vorliegenden Erfindung, wird ein Fördersystem zum Transport von Stückgütern, insbesondere Postsendungen, entlang einer Hauptförderrichtung, bereitgestellt, umfassend eine Steuereinheit und eine Förderstrecke vor. Die Förderstrecke umfasst Segmente, die hintereinander entlang der Hauptförderrichtung angeordnet sind. Die Segmente umfassen im Wesentlichen parallel zueinander angeordnete Fördermittel, beispielsweise Förderbänder, die ausgestaltet sind, die Stückgüter entlang der Hauptförderrichtung zu transportieren. Die Fördermittel sind individuell antreibbar und individuell von der Steuereinheit ansteuerbar. Die Fördermittel von benachbarten Segmenten sind quer zur Hauptförderrichtung zueinander versetzt angeordnet.

Ein Segment umfasst ein oder mehr Fördermittel , die ausgestaltet sind, die Stückgüter entlang der Hauptförderrichtung zu transportieren. Ein Fördermittel eines vorangehenden Segments mündet hierbei in zwei oder mehr Fördermittel eines nachfolgenden Segments.

Wenn ein Segment zwei oder mehr Fördermittel umfasst, können zwei parallel auf gleicher Höhe eines vorangehenden Segmentes übergebene Stückgüter auf unterschiedliche Fördermittel des nachfolgenden Segmentes übergeben werden. Dadurch können diese Stückgüter unterschiedlich rasch von den unterschiedlichen Fördermitteln transportiert werden und so vereinzelt werden. Aber auch wenn nur ein Stückgut übergeben wird, dieses aber auf dem nachfolgenden Segment auf zwei unterschiedlichen Fördermitteln aufliegt, kann durch unterschiedliche rasche Ansteuerung eine Veränderung der Ausrichtung erfolgen.

Um auf besonders einfache Weise eine Versetzung der Segmente quer zur Hauptförderrichtung zu erreichen, sind die Segmente quer zur Hauptförderrichtung zueinander versetzt angeordnet, indem die Fördermittel benachbarter Segmente zueinander versetzt angeordnet sind.

Erfindungsgemäß mündet ein Fördermittel eines vorangehenden Segmentes in zwei oder mehr Fördermittel eines nachfolgenden Segmentes.

Besonders einfach können dadurch auch zwei oder mehr gemeinsam auf dem Fördermittel des vorangehenden Segmentes aufliegende Stückgüter ohne Richtungsänderung auf individuell ansteuerbare Fördermittel überführt werden. So kann besonders einfach eine versetzte Anordnung auch bei Fördermitteln mit im Wesentlichen gleicher Breite erzielt werden.

Um ein möglichst unkompliziertes Fördersystem mit gleichartigen Komponenten bereitzustellen, können ein oder mehrere Segmente gleichartige Fördermittel umfassen. Bei gleichartigen Fördermitteln kann auch eine gleichartige Ansteuerung erfolgen, Aufbau und Wartung erfordern bei allen Fördermitteln die gleiche Fachkompetenz. Dies reduziert die Komplexität des Fördersystems.

Gemäß einer bevorzugten Ausführungsform kann das Fördersystem mindestens einen Sensor umfassen, welcher ausgestaltet ist, Position und/ oder Ausrichtung der Stückgüter zu detektieren und die Steuereinheit kann adaptiert sein, die Fördermittel in Antwort auf die detektierte Position und/ oder Ausrichtung der Stückgüter anzusteuern. So kann eine besonders effiziente, individuell auf die jeweilige Position und/ oder Ausrichtung der Stückgüter auf dem Fördersystem adaptierte Ansteuerung der Fördermittel erfolgen, die somit die Stückgüter besonders effizient manipulieren kann. Um eine erfolgreiche Vereinzelung und/ oder Ausrichtungsveränderung zu erzielen, ist keine zunächst vorliegende Standardausrichtung der Stückgüter erforderlich.

Um ein Stückgut besonders effizient zu manipulieren, kann die Steuereinheit adaptiert sein, ein Stückgut durch Kontrolle der Fördergeschwindigkeit der Fördermittel, insbesondere derjenigen Fördermittel, auf denen das Stückgut aufliegt, und/ oder der direkt angrenzenden Fördermittel, zu rotieren und/ oder zu vereinzeln. So kann eine Berechnung der zu erzielenden Rotation und/ oder Vereinzelung mit einer Rechenkapazität erfolgen, die der Komplexität der Steuereinheit angepasst ist, da sämtliche Fördermittel in die Berechnung einbezogen werden können, aber nicht müssen. Indem nur diejenigen Fördermittel, auf denen das Stückgut aufliegt und/ oder die direkt angrenzenden Fördermittel in die Berechnung einbezogen werden, wird die Berechnung mit besonders geringer Komplexität durchgeführt.

Hinsichtlich eines Verfahrens wird die vorstehend genannte Aufgabe gelöst durch ein Verfahren nach Anspruch 6 zum Transportieren von Stückgütern, insbesondere Postsendungen, auf einer Förderstrecke eines Fördersystems. Die Förderstrecke umfasst Segmente, die hintereinander entlang einer Hauptförderrichtung angeordnet sind. Die Segmente umfassen im Wesentlichen parallel zueinander angeordnete Fördermittel, beispielsweise Förderbänder, die ausgestaltet sind, die Stückgüter entlang der Hauptförderrichtung zu transportieren. Die Fördermittel sind individuell antreibbar und individuell ansteuerbar. Das Verfahren umfasst die Verfahrensschritte:
a) Transportieren eines Stückguts auf einem vorangehenden Segment;
b) Übergeben eines Stückguts entlang der Hauptförderrichtung von einem vorangehenden Segment auf ein nachfolgendes Segment, wobei die Fördermittel der vorgenannten zwei Segmenten quer zur Hauptförderrichtung zueinander versetzt angeordnet sind; und
c) Transportieren des Stückguts auf dem nachfolgenden Segment.

Um eine flexible Ausgestaltung des Fördersystems zu erzielen, umfasst ein Segment ein oder mehr Fördermittel, die ausgestaltet sind, die Stückgüter entlang der Hauptförderrichtung zu transportieren. So können die hintereinander angeordneten Segmente hinsichtlich der Breite und Anordnung ihrer Fördermittel sehr flexibel gestaltet werden.

Um auf besonders unkomplizierte Weise eine Versetzung des nachfolgende Segment zum vorangehenden Segment zu erzielen, ist das nachfolgende Segment zum vorangehenden Segment versetzt angeordnet, indem die Fördermittel des nachfolgenden Segmentes zu den Fördermitteln des vorangehenden Segmentes zueinander versetzt angeordnet sind. So kann darüber hinaus auch bei unterschiedlich breiten Fördermitteln auf besonders einfache Weise eine Versetzung erzielt werden.

3 Erfindungsgemäß mündet ein Fördermittel des vorangehenden Segmentes in zwei oder mehr Fördermittel des nachfolgenden Segmentes. So können ein oder mehrere zunächst auf dem einen Fördermittel des vorangehenden Segmentes aufliegende Stückgüter des vorangehenden Segmentes einzig durch Bewegung in die Hauptförderrichtung auf zwei oder mehr Fördermittel des nachfolgenden Segmentes überführt werden und durch individuelle Ansteuerung dieser Fördermittel individuell weitertransportiert und somit vereinzelt und/ oder rotiert werden. Bei Anordnung der Fördermittel des vorangehenden und des nachfolgendes Segmentes in einer Linie müsste das eine oder die mehreren Stückgüter hierzu noch zusätzlich quer zur Hauptförderrichtung bewegt werden, was komplexer ausgestaltete Fördermittel und zudem eine kompliziertere Ansteuerung erfordern würde.

Gemäß einer bevorzugten Ausführungsform können die Fördermittel benachbarter Segmente so angeordnet sein, dass ein Stückgut von einem Fördermittel des vorangehenden Segmentes auf zwei Fördermittel des nachfolgenden Segmentes übergeben wird. So kann das eine Stückgut durch die zwei Fördermittel des nachfolgenden Segmentes transportiert und manipuliert werden, insbesondere hinsichtlich seiner Ausrichtung. Darüber hinaus ermöglicht diese Anordnung nach dem Übergeben eine besonders einfache Vereinzelung von zwei parallel auf dem Fördermittel des vorangehenden Segmentes angeordneten Stückgütern.

Um eine noch gezieltere und effizientere Manipulation der Stückgüter auf dem Fördersystem zu erreichen, kann ein Detektieren von Position und/ oder Ausrichtung der Stückgüter auf dem Fördersystem und Ansteuerung der Fördermittel in Antwort auf die detektierte Position und/ oder Ausrichtung der Stückgüter erfolgen.

Um ein besonders effizientes Ansteuern der Fördermitteln zu ermöglichen, kann Rotieren und/ oder Vereinzeln der Stückgüter erfolgen durch Kontrollieren der Fördergeschwindigkeit der Fördermittel, insbesondere derjenigen Fördermittel, auf denen die Stückgüter aufliegen, und/ oder der direkt angrenzenden Fördermittel. Je weniger Fördermittel für das Kontrollieren hinzugezogen werden, umso weniger komplex und übersichtlicher sind Berechnung und Durchführung des Verfahrens. Um das Vereinzeln der Stückgüter, insbesondere kleiner Stückgüter, besonders einfach zu ermöglichen, involviert das Übergeben von einem vorangehenden Segment auf ein nachfolgendes Segment zwei oder mehr Fördermittel. Wenn das Stückgut so kleine Ausmaße aufweist, dass es mittig auf nur einem Fördermittel des vorangehenden Segmentes aufliegt, wird so sichergestellt, dass es so auf ein oder mehr Fördermittel des nachfolgenden Segmentes überführt wird. Bei einer ausreichend versetzten Anordnung liegt bei nur einem Fördermittel das Stückgut nun nicht mehr mittig auf dem Fördermittel des nachfolgenden Segmentes auf und kann nun manipuliert werden, bei Überführung auf zwei oder mehr Fördermitteln des nachfolgenden Segmentes kann das nun auf mehr als einem Fördermittel aufliegende Stückgut durch individuelles Antreiben dieser zwei oder mehr Fördermittel manipuliert werden.

Bevorzugte Ausführungsformen der Erfindung werden nachfolgend anhand der Figuren beispielsweise näher erläutert. Dabei zeigen:
- Figur 1: ein gemäß dem Stand der Technik ausgestaltetes, Segmente umfassendes Fördersystem;
- Figur 2: ein erfindungsgemäßes Fördersystem mit alternierend versetzt angeordneten Segmenten;
- Figur 3: einen Vereinzelungsvorgang zweier zunächst gemeinsam, wie in Figur 2 in etwa parallel zur Hauptförderrichtung ausgerichteter und gemeinsam auf einem Fördermittel aufliegender Stückgüter;
- Figur 4: einen Vereinzelungsvorgang zweier Stückgüter, welche zunächst gemeinsam mit ihrem Schwerpunkt auf nur einem Fördermittel des Fördersystems von Figur 3 aufliegen; und
- Figur 5: eine schematische Darstellung eines erfindungsgemäßen Fördersystems, welches eine Vereinzelungs- und Ausrichtungsvorrichtung ausbildet.

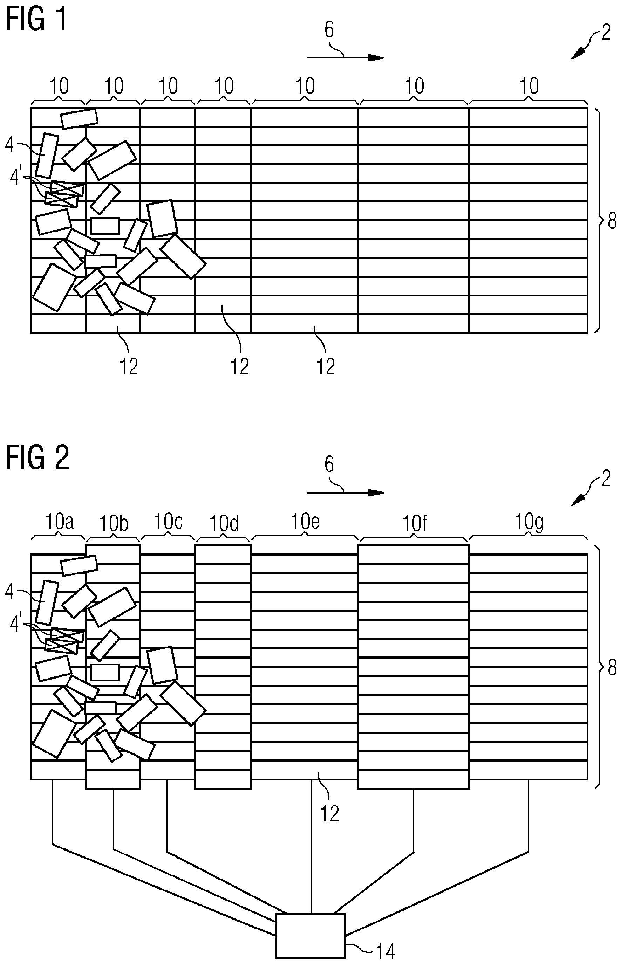

Figur 1 zeigt ein dem Stand der Technik entsprechendes Fördersystem 2, welches Stückgüter 4 entlang einer Hauptförderrichtung 6 auf einer Förderstrecke 8 auf Fördermitteln 12 aufliegend transportiert. Die Fördermittel 12 sind parallel zur Hauptförderrichtung 6 in entlang der Hauptförderrichtung 6 hintereinander angeordneten Segmenten 10 angeordnet, fluchtend und entlang einer Linie. Ein derartiges Fördersystem 2 ist zum Transportieren und Manipulieren von Stückgütern 4 einer Größe optimiert, die der Auflagefläche eines Fördermittels 12 entspricht. Typisches Einsatzgebiet eines derartigen Fördersystems 2 sind Singulatoren im postalischen und logistischen Bereich. Die Stückgüter 4, hier postalische Sendungen, werden zum Transport von einem Segment 10 auf das jeweils nachfolgende Segment 10 übergeben. Große Stückgüter 4 liegen auf einem oder mehreren Fördermitteln 12 zugleich auf und können daher bei individueller Ansteuerung der Fördermittel 12 durch eine hier nicht dargestellte Steuereinheit 14 während ihres Transports vereinzelt und/ oder rotiert werden, beispielsweise indem die Fördermittel 12 auf denen das betreffende Stückgut 4 aufliegt mit höherer Fördergeschwindigkeit 16 als die benachbarten Fördermittel 12 betrieben werden. Wie jedoch ersichtlich ist, liegen zwei kleinere Stückgüter 4', in der zeichnerischen Darstellung mit Kreuzen markiert, gemeinsam auf einem Fördermittel 12 auf. Die Ausgestaltung des Fördersystems 2 mit in einer Linie entlang der Hauptförderrichtung 6 angeordneten Fördermitteln 12 ermöglicht keine individuelle Beeinflussung der beiden kleineren Stückgüter 4' nur durch Ansteuerung der Fördermittel 12, da diese Stückgüter 4' auch stets von einem Fördermittel 12 eines vorangehenden Segments 10 auf ein Fördermittel 12 eines nachfolgenden Segments 10 gemeinsam überführt werden. Die Fördermittel 12 transportieren die Stückgüter 4 entlang der Hauptförderrichtung 6. Nur durch Transport entlang der Hauptförderrichtung 6 können die beiden kleineren Stückgüter 4' nicht auf zwei oder mehr unterschiedliche Fördermittel 12 überführt werden.

Figur 2 zeigt ein Fördersystem 2 mit quer zur Hauptförderrichtung 6 alternierend versetzt angeordneten Segmenten 10a - 10g gemäß der Erfindung. Die Anordnung der Stückgüter 4 entspricht derjenigen von Figur 1 und die beiden kleineren Stückgüter 4` liegen auf dem ersten Segment 10a ebenfalls auf nur einem Fördermittel 12 gemeinsam auf, so dass mit dem in Figur 1 dargestellten Fördersystem 2 keine Vereinzelung der kleineren Stückgüter 4' erfolgen könnte. Durch die versetzte Anordnung der Fördermittel 12 der benachbarten Segmente 10a, 10b können die beiden kleineren Stückgüter 4', die zunächst vollständig gemeinsam auf einem Fördermittel 12 aufliegen, durch alleinigen Transport entlang der Hauptförderrichtung auf zwei unterschiedliche, individuell antreibbare und ansteuerbare Fördermittel 12 des nachfolgenden Segmentes 10b überführt werden. Alle Fördermittel 12 sind mit einer Steuereinheit 14 verbunden, so dass durch unterschiedliche Fördergeschwindigkeiten der zwei unterschiedlichen Fördermittel 12 des nachfolgenden Segmentes 10b eine Vereinzelung der beiden kleineren Stückgüter 4' erfolgen kann. Ein Segment 10 erstreckt sich jeweils über nahezu die gesamte Breite der Förderstrecke 8.

Die in diesem Fördersystem 2 dargestellten Segmente 10a - 10g sind erfindungsgemäß regelmäßig alternierend versetzt angeordnet. Durch die Hintereinanderschaltung einer Vielzahl versetzt angeordneter Segmente 10a - 10g kann an unterschiedlichen Orten der Förderstrecke 8 eine Manipulation der Stückgüter 4 erfolgen. Die Fördermittel 12 sind als Förderbänder ausgestaltet, die den Vorteil einer relativ großen und ebenen Auflagefläche bieten, zudem technisch einfach realisierbar und daher verbreitete Fördermittel 12 sind, aber auch andere Ausgestaltungen, beispielsweise Transportrollen, Transportkugeln o.ä. sind möglich. Auch eine gleichzeitige Verwendung unterschiedlich ausgestalteter Fördermittel 12 - in einem Segment 10 oder in benachbarten Segmenten - ist je nach Einsatzbereich denkbar. Um Stückgüter 4 unterschiedlicher Größe auf einem erfindungsgemäßen Fördersystem 2 zu transportieren und zu manipulieren, Z sind die Segmente (10) regelmäßig alternierend quer zur Hauptförderrichtung (6) zueinander versetzt angeordnet, indem die Fördermittel 12 benachbarter Segmente 10a, 10b zueinander versetzt angeordnet sind.

Das in Figur 2 dargestellte Fördersystem 2 umfasst Segmente 10a - 10g mit Förderbändern als gleichartigen Fördermittel 12, die jeweils die gleiche Breite, aber eine unterschiedliche Länge aufweisen. Um einen noch stärkeren Vereinzelungseffekt zu erzielen, können in weiteren Ausgestaltungen auch ein oder mehrere Segmente 10 mit einem oder mehreren Fördermitteln 12 unterschiedlicher Breite verwendetet werden, so dass ein Fördermittel 12 eines vorangehenden Segmentes 10 in drei oder mehr Fördermittel 12 eines nachfolgenden Segmentes 10 mündet. Durch die versetzte Anordnung sind einige oder alle Fördermittel 12 unterschiedlicher Segmente 10 nicht in einer Linie angeordnet. Ein zunächst einzig auf einem Fördermittel 12 eines Segmentes 10 aufliegendes Stückgut 4 wird so bei einem Transport auf dem Fördersystem 2 entlang der Hauptförderrichtung 6 auf zwei oder mehr Fördermitteln 12 eines in Hauptförderrichtung 6 nachfolgenden Segmentes 10 aufliegen. Eine gleichartige Ausgestaltung der Fördermittel 12 ist meist mit einer geringeren Komplexität in der technischen Realisierung verbunden, wobei die gleichartige Ausgestaltung der Fördermittel 12 insbesondere den Typ des Fördermittels 12 beschreibt, eine unterschiedliche Breite und/ oder Länge der Fördermittel 12 sowie eine unterschiedliche Anzahl an Fördermitteln 12 unterschiedlicher Segment 10 wird von der Bezeichnung gleichartige Fördermittel 12 auch umfasst.

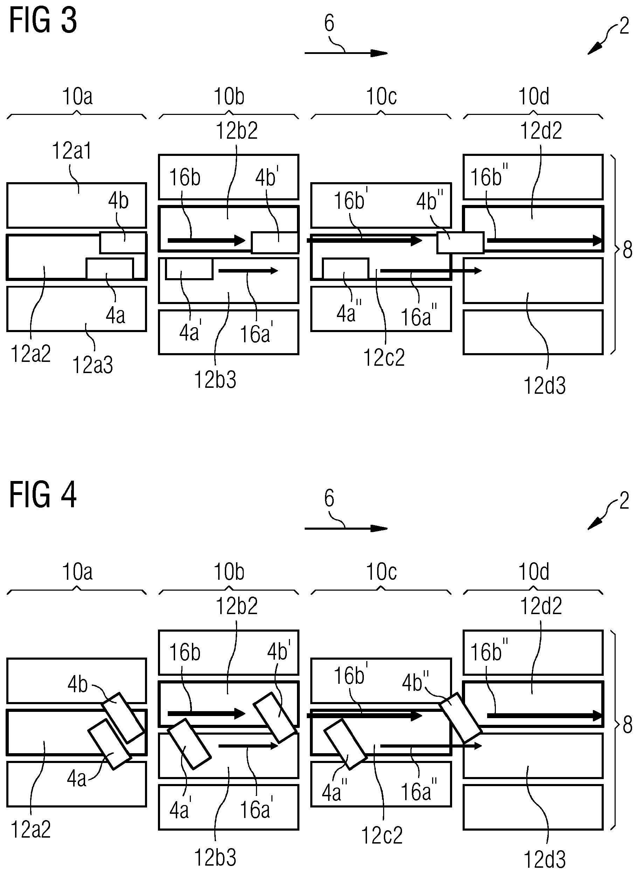

Figur 3 zeigt gemäß einer bevorzugten Ausführungsform der Erfindung einen Vereinzelungsvorgang zweier Stückgüter 4a, 4b, die zunächst gemeinsam, wie in Figur 2 in etwa parallel zur Hauptförderrichtung 6 ausgerichtet und auf einem gemeinsamen Fördermittel 12 aufliegen. Dargestellt ist der gesamte Vereinzelungsvorgang zu unterschiedlichen Zeiten t (Stückgüter 4a, 4b), t' (Stückgüter 4a', 4b') und t"(Stückgüter 4a", 4b"). Das Fördermittel 12a2 des ersten Segmentes 10a mündet in die zwei Fördermittel 12b2, 12b3 des zweiten, nachfolgenden Segments 10b, so dass die beiden Stückgüter 4a, 4b durch Transport auf dem Fördermittel 12a des Segment 10a entlang der Hauptförderrichtung 6 in etwa gleichzeitig auf das Segment 10b und die beiden nachfolgenden Fördermittel 12b2, 12b3 überführt werden. Das Stückgut 4b liegt nach dem Überführen einzig auf dem Fördermittel 12b2 auf, das Stückgut 4a einzig auf dem Fördermittel 12b3.

Nach dem Überführen wird nun das Fördermittel 12b2 mit der Fördergeschwindigkeit 16b entlang der Haupttransportrichtung 6 befördert, wobei es entweder beschleunigt oder mit konstanter Überführungsgeschwindigkeit transportiert wird. Das Stückgut 4a wird auf dem Fördermittel 12b3 verzögert - entweder durch anhalten des Fördermittels 12b3 oder Betreiben mit einer geringeren Fördergeschwindigkeit 16a. Zum Zeitpunkt t` eilt somit das Stückgut 4b' dem Stückgut 4a' deutlich voran.

Beide Stückgüter 4a', 4b' werden nun an das Fördermittel 12c2 übergeben, wobei das Stückgut 4b" das Fördermittel 12c2 bereits wieder verlässt als das Stückgut 4a" erst übernommen wird. Im Anschluss werden die Stückgüter 4a'', 4b" mit gleichen, vorzugsweise aber unterschiedlichen Fördergeschwindigkeiten 16a'', 16b" für eine noch bessere Vereinzelung, auf das nachfolgende Segment 10d überführt - wiederum zeitversetzt auf unterschiedliche Fördermittel 12d2, 12d3, welche ebenfalls individuell ansteuerbar sind.

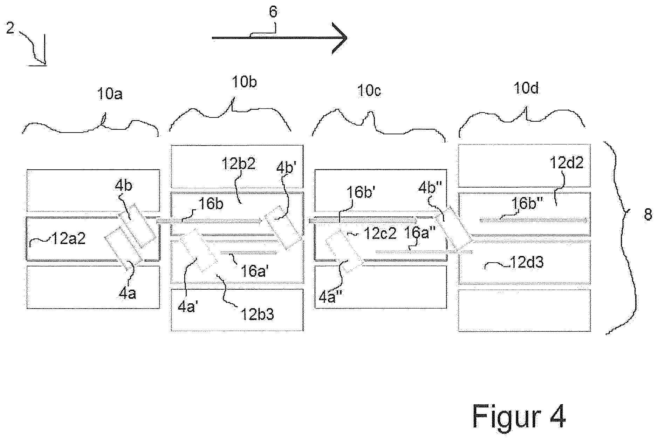

Figur 4 zeigt gemäß einer bevorzugten Ausführungsform der Erfindung einen Vereinzelungsvorgang zweier Stückgüter 4a, 4b zu unterschiedlichen Zeiten t, t` und t", welche zunächst gemeinsam mit ihrem Schwerpunkt auf nur einem Fördermittel 12a2 des Fördersystems 2 von Figur 3 aufliegen. Die Stückgüter 4a, 4b sind schräg zur Hauptförderrichtung 6 ausgerichtet, da sie allerdings mit ihrem Schwerpunkt hauptsächlich auf jeweils einem Fördermittel 12 aufliegen, kann eine Vereinzelung analog wie in Figur 3 erfolgen. Um eine zusätzliche Rotation der Stückgüter 4a, 4b mit dem Ziel einer Ausrichtung parallel zur Hauptförderrichtung 6 müsste zusätzlich noch eine von einer Steuereinheit 14 zeitlich und geschwindigkeitstechnisch kontrollierte Ansteuerung der direkt benachbarten Fördermittel 12, auf denen die Stückgüter 4a, 4b jeweils aufliegen in und/ oder entgegen der Hauptförderrichtung 6 erfolgen. Dies setzt eine genügende Haftung zwischen Stückgut 4 und aufliegendem und direkt benachbartem Fördermittel 12 voraus.

Die Ansteuerung der Fördermittel 12a2, 12b2, 12b3, 12c2, 12d2, 12d3 erfolgt im Wesentlichen analog zur in Figur 3 geschilderten Ansteuerung.

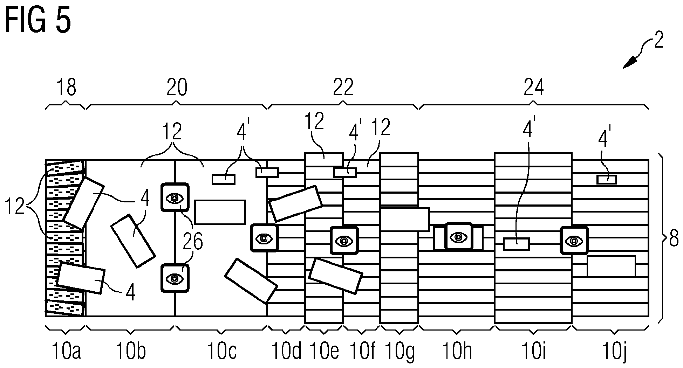

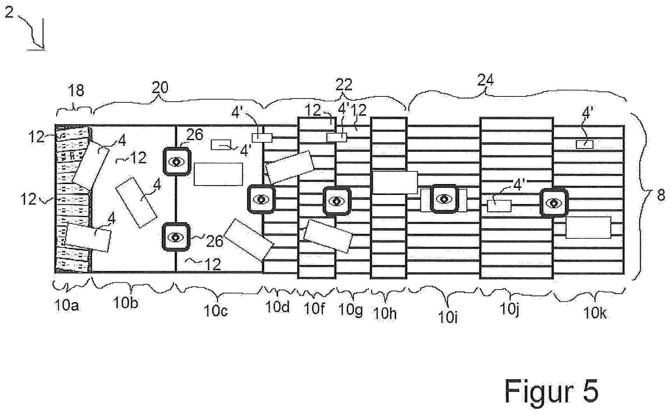

Figur 5 zeigt eine schematische Darstellung eines erfindungsgemäßen Fördersystems 2, welches eine Vereinzelungs- und Ausrichtungsvorrichtung ausbildet. Das Fördersystem 2 ist in im Wesentlichen unterschiedliche Aufgaben ausführende Segmente entlang der Hauptförderrichtung 6 untergegliedert. Zunächst werden die Stückgüter 4, 4' auf einer Verbreiterungsvorrichtung 18 manipuliert mit dem Ziel so gut wie möglich eine Verbreiterung der Stückgutverteilung zu erzielen, indem die Stückgüter 4, 4' entlang und zusätzlich mit einer Bewegungskomponente orthogonal zur Hauptförderrichtung 6 transportiert werden. Im Anschluss erfolgt auf einem Überführungsfördermittel 20 einzig ein Transport entlang der Hauptförderrichtung 6. Das Überführungsfördermittel 20 umfasst zwei Segmente 10b, 10c, die jeweils nur ein einziges, die gesamte Breite der Förderstrecke 8 umspannendes Fördermittel 12 umfassen. Der Ausrichtungsabschnitt 22 wird im Wesentlichen zur Manipulation der Ausrichtung der Stückgüter 4, 4' mittels unterschiedlicher Fördergeschwindigkeiten 16 der Fördermittel 12 verwendet, hierzu sind die Segmente 10d - 10h relativ kurz und quer zur Hauptförderrichtung 6 versetzt zueinander angeordnet. Der Abstandskorrekturabschnitt 24 ist im Wesentlichen ausgestaltet, einen möglichst großen Abstand der Stückgüter 4, 4' entlang der Hauptförderrichtung 6 zu erzielen, hierzu sind die Fördermittel 12 des Abstandskorrekturabschnitts 24 länger ausgestaltet als diejenigen des Ausrichtungsabschnitts 22.

Auf dem Fördersystem 2 werden Stückgüter 4, 4' unterschiedlicher Größe transportiert, wobei die kleineren Stückgüter 4' so klein sind, dass zwei oder mehr Stückgüter 4' im Wesentlichen gemeinsam auf nur einem Fördermittel 12 aufliegen können.

Das Fördersystem 2 umfasst mehrere oberhalb und entlang der Förderstrecke angeordnete, als optische Detektoren ausgestaltete Sensoren 26. Die mit einer in Figur 5 nicht dargestellten Steuereinheit 24 verbundenen Sensoren 26 detektieren Position und Ausrichtung der Stückgüter 4, 4`. Die Steuereinheit 14 steuert die Fördermittel 12 in Antwort auf die detektierte Position und/ oder Ausrichtung der Stückgüter 4 an. Hierzu berechnet die Steuereinheit 14 automatisiert mittels eines Algorithmus eine optimale Ansteuerung der Fördermittel 12. Der Algorithmus kann, muss aber nicht, lernfähig, vorzugsweise iterativ lernfähig sein. Um möglichst wenig Rechenkapazität zu beanspruchen, bezieht der Algorithmus für seine Berechnung der Ansteuerung der Fördermittel 12 insbesondere diejenigen Fördermittel 12, auf denen die jeweils zu vereinzelnden Stückguter 4, 4' gerade aufliegen und die direkt angrenzenden Fördermittel 12 ein. Die Steuereinheit 14 ist auf diese Weise adaptiert, ein Stückgut 4, 4' durch Kontrolle der Fördergeschwindigkeit 16 der Fördermittel 12, insbesondere derjenigen Fördermittel 12, auf denen das Stückgut 4 aufliegt, und/ oder der direkt angrenzenden Fördermittel 12, zu rotieren und/ oder zu vereinzeln.

### Bezugszeichenliste

- 2: Fördersystem
- 4: Stückgut
- 6: Hauptförderrichtung
- 8: Förderstrecke
- 10: Segment
- 12: Fördermittel
- 14: Steuereinheit
- 16: Fördergeschwindigkeit
- 18: Verbreiterungsvorrichtung
- 20: Überführungsfördermittel
- 22: Ausrichtungsabschnitt
- 24: Abstandskorrekturabschnitt
- 26: Sensor

## Patentansprüche

1. Fördersystem (2) zum Transport von Stückgütern (4), insbesondere Postsendungen, entlang einer Hauptförderrichtung (6), umfassend eine Steuereinheit (14) und eine Förderstrecke (8, wobei
- die Förderstrecke (8) mehr als zwei Segmente (10) umfasst, die hintereinander entlang der Hauptförderrichtung (6) angeordnet sind;
- die Segmente (10) im Wesentlichen parallel zueinander angeordnete Fördermittel (12) umfassen, die ausgestaltet sind, die Stückgüter (4) entlang der Hauptförderrichtung (6) zu transportieren;
- die Fördermittel (12) individuell antreibbar und individuell von der Steuereinheit (14) ansteuerbar sind;
- ein Fördermittel (12) eines vorangehenden Segments (10) in zwei oder mehr Fördermittel (12) eines nachfolgenden Segments (10) mündet;
- sich ein Segment (10) jeweils über nahezu die gesamte Breite der Förderstrecke (8) erstreckt,
**dadurch gekennzeichnet, dass**
die Segmente (10) regelmäßig alternierend quer zur Hauptförderrichtung (6) zueinander versetzt angeordnet sind, indem die Fördermittel (12) benachbarter Segmente (10) zueinander versetzt angeordnet sind.

2. Fördersystem (2) nach Anspruch 1, **dadurch gekennzeichnet, dass**
die Fördermittel als Förderbänder ausgestaltet sind.

3. Fördersystem (2) nach einem der Ansprüche 1 oder 2, **dadurch gekennzeichnet, dass**
ein oder mehrere Segmente (10) gleichartige Fördermittel (12) umfassen.

4. Fördersystem (2) nach einem der Ansprüche 1 bis 3, **dadurch gekennzeichnet, dass**
das Fördersystem (2) mindestens einen Sensor (26) umfasst, welcher ausgestaltet ist, Position und/oder Ausrichtung der Stückgüter (4) zu detektieren und dass die Steuereinheit (14) adaptiert ist, die Fördermittel (12) in Antwort auf die detektierte Position und/oder Ausrichtung der Stückgüter (4) anzusteuern.

5. Fördersystem (2) nach einem der Ansprüche 1 bis 4, **dadurch gekennzeichnet, dass**
die Steuereinheit (14) adaptiert ist, ein Stückgut (4) durch Kontrolle der Fördergeschwindigkeit (16) der Fördermittel (12), insbesondere derjenigen Fördermittel (12), auf denen das Stückgut (4) aufliegt, und/oder der direkt angrenzenden Fördermittel (12), zu rotieren und/oder zu vereinzeln.

6. Verfahren zum Transportieren von Stückgütern, insbesondere Postsendungen, auf einer Förderstrecke (8) eines Fördersystems (2), wobei
- die Förderstrecke (8) mehr als zwei Segmente (10) umfasst, die hintereinander entlang einer Hauptförderrichtung (6) angeordnet sind;
- die Segmente (10) im Wesentlichen parallel zueinander angeordnete Fördermittel (12) umfassen, die ausgestaltet sind, die Stückgüter (4) entlang der Hauptförderrichtung (6) zu transportieren;
- die Fördermittel (12) individuell antreibbar und individuell ansteuerbar sind;
- ein Fördermittel (12) des vorangehenden Segments (10) in zwei oder mehr Fördermittel (12) des nachfolgenden Segemntes (10) mündet,
umfassend die Verfahrensschritte
a) Transportieren eines Stückguts (4) mittels der Fördermittel (12) auf einem vorangehenden Segment (10a);
b) Übergeben eines Stückguts (4) entlang der Hauptförderrichtung (6) von einem vorangehenden Segment (10a) auf ein zu diesem vorangehenden Segment (10a) versetzt angeordnetes nachfolgendes Segment (10b), wobei das nachfolgende Segment (10) zum vorangehenden Segment (10) versetzt angeordnet ist, indem die Fördermittel (12) des nachfolgenden Segmentes (10) zu den Fördermitteln (12) des vorangehenden Segmentes (10) zueinander versetzt angeordnet sind und wobei sich ein Segment 10 jeweils über nahezu die gesamte Breite der Förderstrecke 8 erstreckt; und
c) Transportieren des Stückguts (4) mittels der Fördermittel (12) auf dem nachfolgenden Segment;
**dadurch gekennzeichnet, dass**
die Segmente (10) regelmäßig alternierend quer zur Hauptförderrichtung (6) zueinander versetzt angeordnet sind, indem die Fördermittel (12) benachbarter Segmente (10) zueinander versetzt angeordnet sind.

7. Verfahren nach Anspruch 6, **dadurch gekennzeichnet, dass** die Fördermittel (12) als Förderbänder ausgestaltet sind.

8. Verfahren nach einem der Ansprüche 6 oder 7, **dadurch gekennzeichnet, dass**
die Fördermittel (12) benachbarter Segmente (10) so angeordnet sind, dass ein Stückgut (4) von einem Fördermittel (12) des vorangehenden Segmentes (10) auf zwei Fördermittel (12) des nachfolgenden Segmentes (10) übergeben wird.

9. Verfahren nach einem der Ansprüche 6 bis 8, **gekennzeichnet durch**
Detektieren von Position und/oder Ausrichtung der Stückgüter (4) auf dem Fördersystem (2) und Ansteuerung der Fördermittel (12) in Antwort auf die detektierte Position und/oder Ausrichtung der Stückgüter.

10. Verfahren nach einem der Ansprüche 6 bis 9, **gekennzeichnet durch**
Rotieren und/oder Vereinzeln der Stückgüter (4) durch Kontrollieren der Fördergeschwindigkeit (16) der Fördermittel (12), insbesondere derjenigen Fördermittel (12), auf denen die Stückgüter (4) aufliegen, und/oder der direkt angrenzenden Fördermittel (12).

## Claims

1. Conveying system (2) for transporting piece goods (4), in particular postal items, along a main conveying direction (6), comprising a control unit (14) and a conveying section (8), wherein
- the conveying path (8) comprises more than two segments (10) which are arranged one behind the other along the main conveying direction (6);
- the segments (10) comprise conveying means (12) arranged substantially parallel to one another, which are designed to transport the piece goods (4) along the main conveying direction (6);
- the conveying means (12) are individually drivable and individually controllable by the control unit (14);
- a conveying means (12) of a preceding segment (10) opens into two or more conveying means (12) of a following segment (10);
- a segment (10) extends in each case over almost the entire width of the conveyor section (8),
**characterised in that**
the segments (10) are regularly arranged alternately offset relative to one another transversely to the main conveying direction (6) **in that** the conveying means (12) of adjacent segments (10) are arranged offset relative to one another.

2. Conveyor system (2) according to claim 1, **characterised in that** the conveying means are designed as conveyor belts.

3. Conveyor system (2) according to one of the claims 1 or 2, **characterised in that** one or more segments (10) comprise similar conveyor means (12).

4. Conveyor system (2) according to one of the claims 1 to 3, **characterised in that**
the conveyor system (2) comprises at least one sensor (26) which is designed to detect the position and/or orientation of the piece goods (4), and **in that** the control unit (14) is adapted to control the conveyor means (12) in response to the detected position and/or orientation of the piece goods (4).

5. Conveyor system (2) according to one of the claims 1 to 4, **characterised in that** the control unit (14) is adapted to rotate and/or separate a piece goods (4) by controlling the conveying speed (16) of the conveying means (12), in particular of those conveying means (12) on which the piece goods (4) rest and/or of the directly adjacent conveying means (12).

6. Method for transporting piece goods, in particular mail items, on a conveyor section (8) of a conveyor system (2), wherein
- the conveyor section (8) comprises more than two segments (10) which are arranged one behind the other along a main conveying direction (6);
- the segments (10) comprise conveying means (12) arranged substantially parallel to one another, which are designed to transport the piece goods (4) along the main conveying direction (6);
- the conveying means (12) are individually drivable and individually controllable;
- a conveying means (12) of the preceding segment (10) opens into two or more conveying means (12) of the following segment (10),
comprising the steps of
a) transporting a piece of goods (4) by means of the conveying means (12) on a preceding segment (10a);
b) transferring a piece of material (4) along the main conveying direction (6) from a preceding segment (10a) to a following segment (10b) arranged offset relative to this preceding segment (10a), the following segment (10) being arranged offset relative to the preceding segment (10) in that the conveying means (12) of the following segment (10) are arranged offset relative to the conveying means (12) of the preceding segment (10) and in which a segment (10) extends in each case over virtually the entire width of the conveying path (8); and
c) transporting the piece goods (4) by means of the conveying means (12) on the following segment;
**characterised in that**
the segments (10) are regularly arranged alternately offset relative to one another transversely to the main conveying direction (6) **in that** the conveying means (12) of adjacent segments (10) are arranged offset relative to one another.

7. Method according to claim 6, **characterised in that** the conveying means (12) are designed as conveyor belts.

8. Method according to one of the claims 6 or 7, **characterised in that** the conveying means (12) of adjacent segments (10) are arranged in such a way that a piece of material (4) is transferred from one conveying means (12) of the preceding segment (10) to two conveying means (12) of the following segment (10).

9. Method according to one of claims 6 to 8, **characterised by** detecting the position and/or orientation of the piece goods (4) on the conveyor system (2) and controlling the conveyor means (12) in response to the detected position and/or orientation of the piece goods.

10. Method according to one of claims 6 to 9, **characterised by** rotating and/or separating the piece goods (4) by controlling the conveying speed (16) of the conveying means (12), in particular of those conveying means (12) on which the piece goods (4) rest and/or of the directly adjacent conveying means (12).

## Revendications

1. Système de convoyage (2) pour transporter des articles de détail (4), en particulier des envois postaux, le long d'une direction de convoyage principale (6), comprenant une unité de commande (14) et une voie de convoyage (8),
dans lequel
- la voie de convoyage (8) comprend plus de deux segments (10) qui sont disposés les uns derrière les autres le long de la direction de convoyage principale (6) ;
- les segments (10) comprennent des moyens de convoyage (12) disposés sensiblement parallèlement les uns aux autres, qui sont conçus pour transporter les articles (4) le long de la direction de convoyage principale (6) ;
- les moyens de convoyage (12) peuvent être entraînés individuellement et pilotés individuellement par l'unité de commande (14) ;
- un moyen de convoyage (12) d'un segment précédent (10) débouche dans deux ou plusieurs moyens de convoyage (12) d'un segment suivant (10) ;
- un segment respectif (10) s'étend pratiquement sur toute la largeur de la voie de convoyage (8),
**caractérisé en ce que**
les segments (10) sont disposés régulièrement en alternance en étant décalés les uns par rapport aux autres transversalement à la direction de convoyage principale (6), du fait que les moyens de convoyage (12) de segments adjacents (10) sont décalés les uns par rapport aux autres.

2. Système de convoyage (2) selon la revendication 1,
**caractérisé en ce que**
les moyens de convoyage sont réalisés sous forme de bandes transporteuses.

3. Système de convoyage (2) selon l'une des revendications 1 ou 2,
**caractérisé en ce que**
un ou plusieurs segments (10) comprennent des moyens de convoyage (12) de même type.

4. Système de convoyage (2) selon l'une des revendications 1 à 3,
**caractérisé en ce que**
le système de convoyage (2) comprend au moins un capteur (26) qui est conçu pour détecter la position et/ou l'orientation des articles (4), et
**en ce que** l'unité de commande (14) est adaptée pour piloter les moyens de convoyage (12) en réponse à la position et/ou à l'orientation détectée des articles (4).

5. Système de convoyage (2) selon l'une des revendications 1 à 4,
**caractérisé en ce que**
l'unité de commande (14) est adaptée pour faire tourner et/ou individualiser un article (4) en contrôlant la vitesse de convoyage (16) des moyens de convoyage (12), en particulier la vitesse des moyens de convoyage (12) sur lesquels repose l'article (4) et/ou la vitesse des moyens de convoyage (12) directement adjacents.

6. Procédé pour transporter des articles de détail, en particulier des envois postaux, sur une voie de convoyage (8) d'un système de convoyage (2), dans lequel
- la voie de convoyage (8) comprend plus de deux segments (10) qui sont disposés les uns derrière les autres le long d'une direction de convoyage principale (6) ;
- les segments (10) comprennent des moyens de convoyage (12) disposés sensiblement parallèlement les uns aux autres, qui sont conçus pour transporter les articles (4) le long de la direction de convoyage principale (6) ;
- les moyens de convoyage (12) peuvent être entraînés individuellement et pilotés individuellement ;
- un moyen de convoyage (12) du segment précédent (10) débouche dans deux ou plusieurs moyens de convoyage (12) du segment suivant (10),
comprenant les étapes consistant à :
a) transporter un article (4) sur un segment précédent (10a) à l'aide des moyens de convoyage (12) ;
b) transférer un article (4) le long de la direction de convoyage principale (6) d'un segment précédent (10a) à un segment suivant (10b) décalé par rapport audit segment précédent (10a), le segment suivant (10) étant décalé par rapport au segment précédent (10) du fait que les moyens de convoyage (12) du segment suivant (10) sont décalés par rapport aux moyens de convoyage (12) du segment précédent (10), un segment (10) respectif s'étendant pratiquement sur toute la largeur de la voie de convoyage (8) ; et
c) transporter l'article (4) sur le segment suivant à l'aide des moyens de convoyage (12) ;
**caractérisé en ce que**
les segments (10) sont disposés régulièrement en alternance en étant décalés les uns par rapport aux autres transversalement à la direction de convoyage principale (6), du fait que les moyens de convoyage (12) de segments adjacents (10) sont décalés les uns par rapport aux autres.

7. Procédé selon la revendication 6,
**caractérisé en ce que**
les moyens de convoyage (12) sont réalisés sous forme de bandes transporteuses.

8. Procédé selon l'une des revendications 6 ou 7,
**caractérisé en ce que**
les moyens de convoyage (12) de segments adjacents (10) sont disposés de telle sorte qu'un article (4) est transféré d'un moyen de convoyage (12) du segment précédent (10) à deux moyens de convoyage (12) du segment suivant (10).

9. Procédé selon l'une des revendications 6 à 8,
**caractérisé par**
la détection de la position et/ou de l'orientation des articles (4) sur le système de convoyage (2), et par le pilotage des moyens de convoyage (12) en réponse à la position et/ou à l'orientation détectée des articles.

10. Procédé selon l'une des revendications 6 à 9,
**caractérisé par**
la rotation et/ou l'individualisation des articles (4) par contrôle de la vitesse de convoyage (16) des moyens de convoyage (12), en particulier la vitesse des moyens de convoyage (12) sur lesquels reposent les articles (4), et/ou la vitesse des moyens de convoyage (12) directement adjacents.
